# EUROPEAN PATENT APPLICATION

(11) **EP 2 787 735 A1**
(43) Date of publication of application: **08.10.2014**
(21) Application number: 12853046.6
(22) Date of filing: 19.10.2012
(51) Int. Cl.: H04N 13/02, G06T 1/00, H04N 5/225

(54) **IMAGE PROCESSING DEVICE, IMAGE PROCESSING METHOD AND PROGRAM**

(30) Priority: 29.11.2011 JP 2011261033
(71) Applicant: Sony Corporation, Tokyo 108-0075 (JP)
(72) Inventor: ITO, Atsushi, Tokyo 108-0075 (JP); YAMAZAKI, Tomohiro, Tokyo 108-0075 (JP)
(74) Representative: Ealey, Douglas Ralph
(86) International application number: PCT/JP2012/077067
(87) International publication number: WO 2013/080697

(57) **Abstract**

An apparatus and a method are provided, which can output stereo images that can be displayed as 3D even in any one of the case where a twin-lens camera captures images with the camera held horizontally or the case where the twin-lens camera captures images with the camera held vertically. The image processing apparatus includes an image input unit configured to receive, as input images, a left-eye image and a right-eye image which are captured from different view points, and an image-capturing angle determination unit configured to output a control signal according to an angle of a camera during image-capturing of the input images, wherein in a case where the control signal indicates a horizontally-captured image obtained by image-capturing process with a twin-lens camera held horizontally, the left-eye image and the right-eye image which are the input images are output, and in a case where the control signal indicates a vertically-captured image obtained by image-capturing process with the twin-lens camera held vertically, any one of the left-eye image and the right-eye image is input into a stereo image generation processing unit, and a left-eye image and a right-eye image are output, which are generated by causing the stereo image generation processing unit to execute 2D-3D conversion processing based on a single image.

## Description

### TECHNICAL FIELD

The present disclosure relates to an image processing apparatus, an image processing method, and a program. More specifically, the present disclosure relates to an image processing apparatus, an image processing method, and a program for generating a three-dimensional image (3D image) that can be viewed stereoscopically (stereoscopic viewing).

### BACKGROUND ART

An image supporting stereoscopic viewing that can be viewed as a stereoscopic image having a depth is constituted by a combination of two images, i.e., a left-eye image for the left-eye and a right-eye image for the right-eye which are images taken from different view points. In order to obtain the images from the two view points, i.e., both-eyes parallax images, for example, two image-capturing apparatuses are arranged spaced apart from each other to the right and the left and are caused to be captured images.

A pair of stereo images captured includes a pair of images including a left-eye image that is captured by the image-capturing apparatus at the left side and that is observed with the left eye, and a right-eye image that is captured by the image-capturing apparatus at the right side and that is observed with the right eye.

The pair of stereo images constituted by the pair of images including the left-eye image and the right-eye image are separated into the left-eye image and the right-eye image, and are displayed on a display device that can present the images to the left eye and the right eye of the observer, so that the observer can perceive the images as a stereoscopic images.

A camera having twin-lens configuration is used as a configuration for capturing the pair of images including the left-eye image and the right-eye image in image-capturing processing that is performed once with one camera. This kind of twin-lens configuration camera is called, for example, a stereo camera.

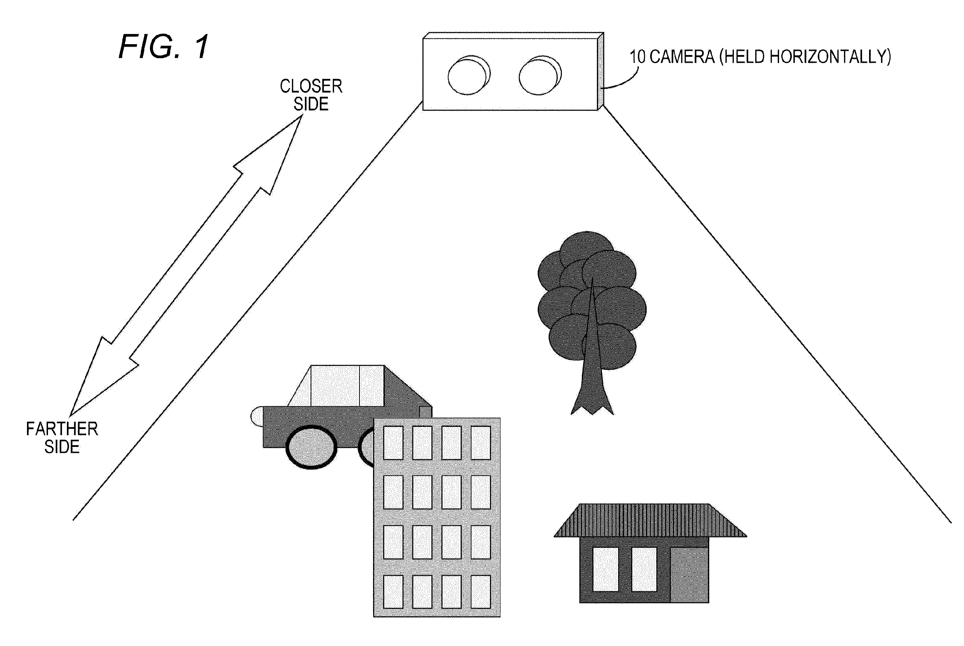

Fig. 1 illustrates an image-capturing method performed by an image-capturing apparatus having a stereo image-capturing system.

A camera 10 illustrated in Fig. 1 is a stereo camera having twin-lens configuration for capturing the left-eye image and the right-eye image. The image-capturing apparatus having such twin-lens stereo image-capturing system is usually considered to be held horizontally, and a parallax image is obtained based on deviation of the horizontal positions to the right and the left.

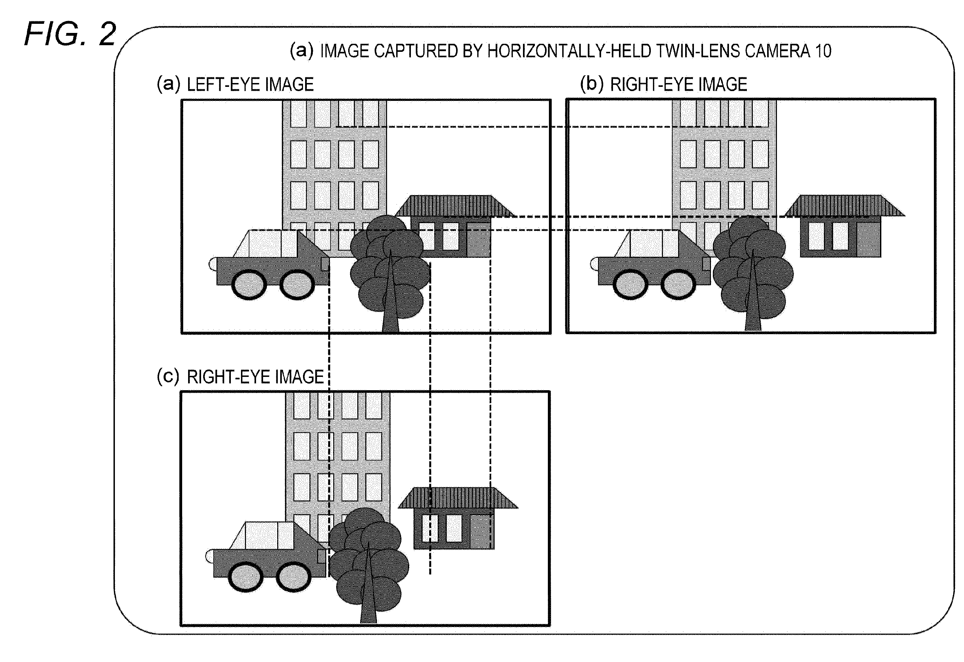

Figs. 2(a) to 2(c) are figures illustrating an example of image-capturing process with the camera held horizontally using an image-capturing apparatus having a stereo image-capturing system.

Fig. 2(a) is a left-eye image, Figs. 2(b) and 2(c) are the same drawing and are the right-eye images.

Both of the left-eye image (Fig. 2(a)) and the right-eye images (Figs. 2(b), 2(c)) are made by capturing images of a car, a building, a tree, and a house, which are subjects, but the image-capturing direction is different according to the deviation of the lens positions of the camera, and therefore, the arrangement of these subjects on each image is slightly different.

Dotted lines connecting between the left-eye image (Fig. 2(a)) and the right-eye image (Figs. 2(b)) indicate that each subject is not deviated in the vertical direction.

On the other hand, dotted lines connecting between the left-eye image (Fig. 2(a)) and the right-eye image (Figs. 2(c)) indicate that the subject positions in each image are deviated in the right-and-left direction (horizontal direction) in accordance with the distance from the image-capturing apparatus.

This deviation in the right-and-left direction (horizontal direction) is the parallax. By displaying two images having parallax as described above on a display device capable of presenting the images to the left eye and the right eye of the observer, the observer can perceive the images as a stereoscopic image.

In order to cause a camera having a twin-lens configuration to capture the left-eye image and the right-eye image having the parallax, it is necessary to hold the camera 10 horizontally as illustrated in Fig. 1.

However, when an image of a vertically-long composition is to be captured, the camera is inclined 90 degrees and the images are captured, which means that so-called vertically-held image-capturing is performed.

When the camera 10 having the twin-lens configuration is inclined 90 degrees as illustrated in Fig. 1, and the images are captured while the camera is held vertically, then, the parallax in the horizontal direction is not generated in the left-eye image and the right-eye image obtained as the captured images. As a result, they are images that cannot be displayed as a stereo image.

Fig. 3 is a figure illustrating an example of processing for capturing images while holding the camera vertically upon inclining the camera 10 of the twin-lens configuration having the stereo image-capturing system 90 degrees.

Fig. 4 illustrates (a) left-eye image and (b) right-eye image obtained by the image-capturing process with the camera held vertically as illustrated in Fig. 3.

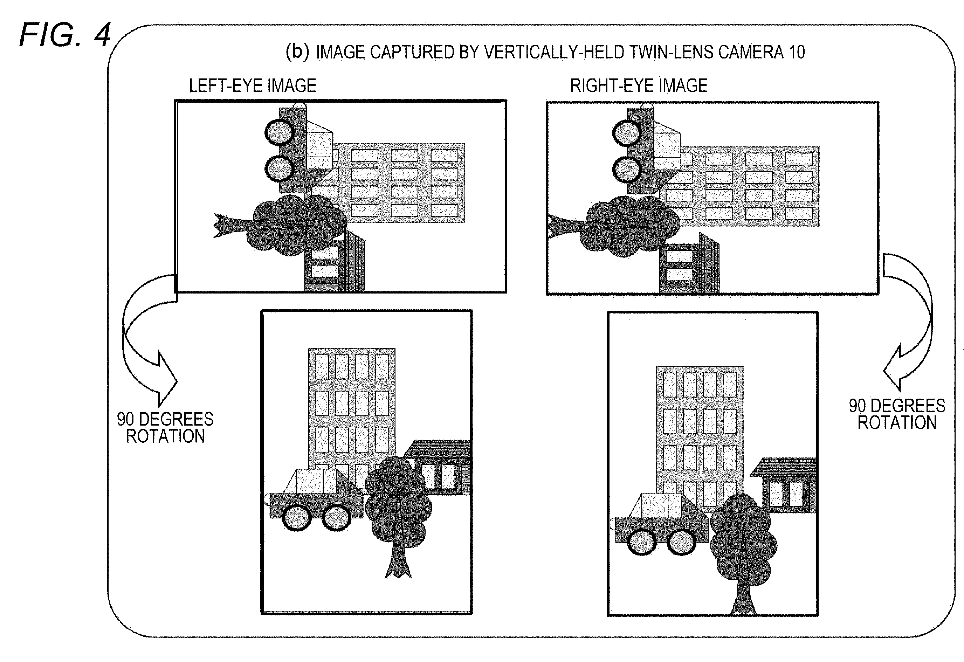

Usually, the images thus captured are displayed as images of Figs. 4(c), 4(d) while they are rotated 90 degrees during display.

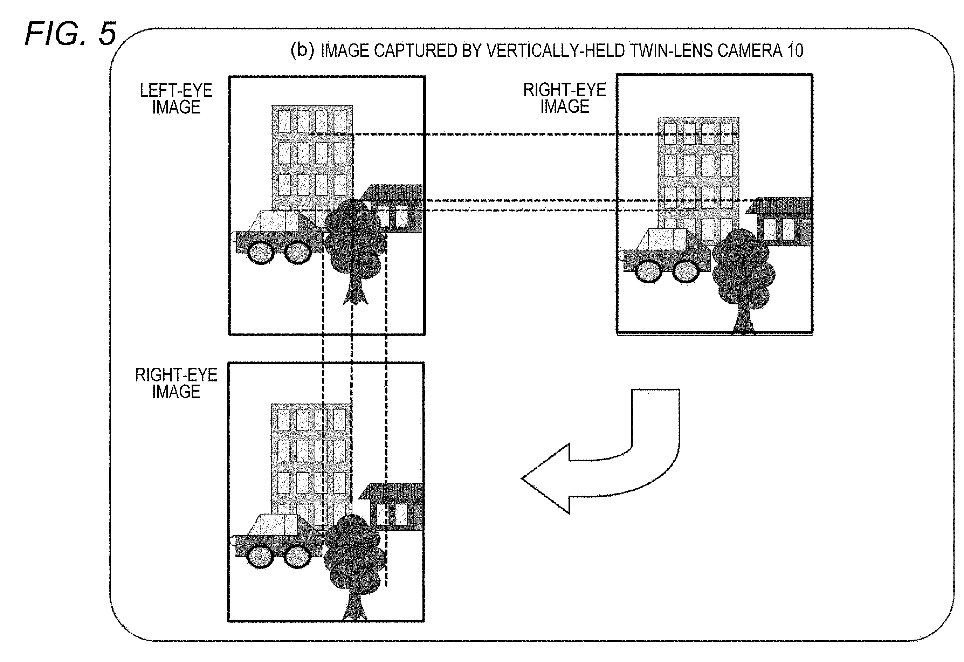

Figs. 5(a) to 5(c) shows:
(a) left-eye image displayed on a display unit (= Fig. 4(c)), and
(b), (c) right-eye images displayed on the display unit (= Fig. 4(d)).

Dotted lines indicate deviation between images.

As can be understood from the dotted lines between Figs. 5(a), 5(c), there is no deviation in the horizontal direction between (a) left-eye image and (c) right-eye image. More specifically, there is no parallax, and even when these two images re displayed on the 3D image display device, stereoscopic feeling cannot be perceived.

On the other hand, as can be understood from the dotted lines between Figs. 5(a), 5(b), there occurs deviation in the vertical direction between (a) left-eye image and (b) right-eye image. When these two images are displayed on a 3D image display device, only vertical image deviation is perceived, and no stereoscopic feeling can be obtained.

This is because the 3D display is configured to cause a person to feel the stereoscopic feeling by inputting two images having parallax in the horizontal direction into the right and the left eyes of the person.

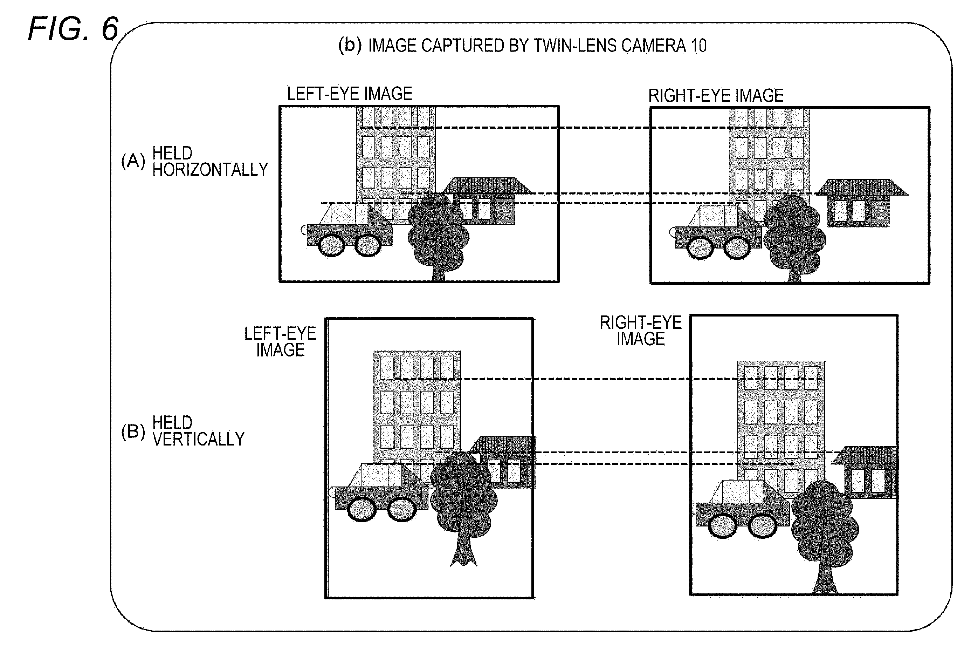

Figs. 6(A) to 6(B) shows:
(A) a left-eye image and a right-eye image that has parallax in the horizontal direction that are captured by a horizontally-held stereo camera, and that has no deviation in the vertical direction; and
(B) a left-eye image and a right-eye image that does not have parallax in the horizontal direction that are captured by a vertically-held stereo camera, and that has only the deviation in the vertical direction.

When the pair of images of Fig. 6(A) is displayed on the 3D display device, stereoscopic feeling can be perceived, but even when the pair of images of Fig. 6(B) is displayed on the 3D display device, stereoscopic feeling cannot be perceived.

As described above, there is a problem in that the images captured with the camera held vertically in the stereo image image-capturing using the twin-lens camera cannot be used by the 3D display device.

In view of this problem, for example, Patent Document 1 (JP 2008-141514 A) suggests a method for a configuration using a stereo camera having a twin-lens configuration, wherein when the camera is held vertically, captured image data of one of the right and the left images are not recorded, so that the memory is saved.

On the other hand, Patent Document 2 (JP 2009-188931 A) suggests a method for capturing stereoscopic images by causing the image-capturing element to mechanically rotate and move while the camera is held vertically.

However, Patent Document 1 (JP 2008-141514 A) is processing that disables stereoscopic image-capturing when the images are captured with the camera held vertically, and essentially, this is not the solution for achieving the stereoscopic image-capturing process.

On the other hand, the solution of Patent Document 2 (JP 2009-188931 A) enables stereoscopic image-capturing when the camera is held vertically. However, in order to achieve mechanical rotation of the image-capturing elements, there is a problem in that the size of the image-capturing apparatus is increased, and the direction and the positions of both of the right and left eyes may be deviated due to mechanical precision. In addition, there is a time lag to switch between horizontally-held mode and vertically-held mode, and it is impossible to cope with immediate image-capturing, and in addition, there is a problem in that it is difficult to switch between the horizontally-held mode and the vertically-held mode during the motion picture image-capturing process.

### CITATION LIST

### PATENT DOCUMENT

Patent Document 1: JP 2008-141514 A
Patent Document 2: JP 2009-188931 A

### SUMMARY OF THE INVENTION

### PROBLEMS TO BE SOLVED BY THE INVENTION

The present disclosure is made, for example in view of the above problems, and it is an object of the present disclosure to provide an image processing apparatus, an image processing method, and a program capable of generating images that can be perceived stereoscopically without depending on how the camera is held.

According to an example of the present disclosure, it is an object to provide an image processing apparatus, an image processing method, and a program capable of generating a parallax image from which stereoscopic feeling can be perceived even when a stereo camera is held vertically, by providing a function for generating right and left parallax images from any one of right and left 2D images captured by the stereo camera (2D/3D conversion function).

### SOLUTIONS TO PROBLEMS

A first aspect of the present disclosure is an image processing apparatus which includes:
an image input unit configured to receive, as input images, a left-eye image and a right-eye image which are captured from different view points; and
an image-capturing angle determination unit configured to output a control signal according to an angle of a camera during image-capturing of the input images,
wherein in a case where the control signal indicates a horizontally-captured image obtained by image-capturing process with a twin-lens camera held horizontally, the left-eye image and the right-eye image which are the input images are output, and
in a case where the control signal indicates a vertically-captured image obtained by image-capturing process with the twin-lens camera held vertically, any one of the left-eye image and the right-eye image is input into a stereo image generation processing unit, and a left-eye image and a right-eye image are output, which are generated by causing the stereo image generation processing unit to execute 2D-3D conversion processing for generating the left-eye image and the right-eye image for 3D image display through image conversion processing based on a single 2D image.

Further, according to an embodiment of the image processing apparatus according to the present disclosure, the image processing apparatus includes a depth map generation processing unit for generating a depth map based on the input image, and the stereo image generation processing unit applies the depth map to execute the 2D-3D conversion processing in which a parallax is set in accordance with a subject distance, thus generating the left-eye image and the right-eye image.

Further, according to an embodiment of the image processing apparatus according to the present disclosure, the image processing apparatus includes:
an image rotation unit configured to rotate, 90 degrees, an image that is input into the stereo image generation processing unit;
a depth map generation processing unit configured to generate a depth map on the basis of the input image; and
a depth map rotation unit configured to rotate, 90 degrees, the depth map generated by the depth map generation processing unit,
wherein the stereo image generation processing unit receives the image rotated 90 degrees from the image rotation unit and the depth map rotated 90 degrees from the depth map rotation unit, and generates the left-eye image and the right-eye image by executing the 2D-3D conversion processing in which a parallax is set in accordance with a subject distance on the basis of the input data, thus generating the left-eye image and the right-eye image.

Further, according to an embodiment of the image processing apparatus according to the present disclosure, the image-capturing angle determination unit generates and outputs a control signal with which three types of image-capturing angles (a) to (c) as described below can be determined:
(a) the input image is a horizontally-captured image obtained by image-capturing process with a twin-lens camera held horizontally;
(b) the input image is a vertically-captured image obtained by image-capturing process with a twin-lens camera held horizontally, wherein the input image is the captured image in which the left side of the camera is at the top and the right side of the camera is at the bottom; and
(c) the input image is a vertically-captured image obtained by image-capturing process with a twin-lens camera held horizontally, wherein the input image is the captured image in which the left side of the camera is at the bottom and the right side of the camera is at the top.

Further, according to an embodiment of the image processing apparatus according to the present disclosure, the stereo image generation processing unit generates the left-eye image and the right-eye image by executing 2D-3D conversion processing to which a depth map is not applied.

Further, according to an embodiment of the image processing apparatus according to the present disclosure, the image processing apparatus has a configuration for receiving a depth map based on the input image from an outside, and the stereo image generation processing unit generates the left-eye image and the right-eye image by executing the 2D-3D conversion processing in which a parallax is set in accordance with a subject distance by applying the depth map received from the outside

Further, according to an embodiment of the image processing apparatus according to the present disclosure, in a case where the control signal indicates a vertically-captured image obtained by image-capturing process with the twin-lens camera held vertically, the image processing apparatus outputs, to the image-capturing apparatus, a control signal for receiving any one of the left-eye image and the right-eye image, or a control signal for capturing any one of the left-eye image and the right-eye image.

Further, according to an embodiment of the image processing apparatus according to the present disclosure, the image processing apparatus has a depth map generation processing unit for generating a depth map based on the input image, and the image-capturing angle determination unit executes analysis processing of the depth map, and determines an angle of a camera during image-capturing of the input image on the basis of an analysis result, and outputs a control signal according to a determination result.

Further, a second aspect of the present disclosure is an image processing method executed by an image processing apparatus, which includes
image input processing for receiving, as input images, a left-eye image and a right-eye image which are captured from different view point;
image-capturing angle determination processing for outputting a control signal according to an angle of a camera during image-capturing of the input images; and
processing for selectively executing any one of image output processing including processing for, in a case where the control signal indicates a horizontally-captured image obtained by image-capturing process with a twin-lens camera held horizontally, outputting the left-eye image and the right-eye image which are the input images, and processing for, in a case where the control signal indicates a vertically-captured image obtained by image-capturing process with the twin-lens camera held vertically, inputting any one of the left-eye image and the right-eye image into a stereo image generation processing unit, and outputting a left-eye image and a right-eye image, which are generated by causing the stereo image generation processing unit to execute 2D-3D conversion processing for generating the left-eye image and the right-eye image for 3D image display through image conversion processing based on a single 2D image.

Further, a third aspect of the present disclosure is a program executing image processing on an image processing apparatus, which causes the image processing apparatus to execute:
image input processing for receiving, as input images, a left-eye image and a right-eye image which are captured from different view point;
image-capturing angle determination processing for outputting a control signal according to an angle of a camera during image-capturing of the input images; and
processing for selectively executing any one of image output processing including processing for, in a case where the control signal indicates a horizontally-captured image obtained by image-capturing process with a twin-lens camera held horizontally, outputting the left-eye image and the right-eye image which are the input images, and processing for, in a case where the control signal indicates a vertically-captured image obtained by image-capturing process with the twin-lens camera held vertically, inputting any one of the left-eye image and the right-eye image into a stereo image generation processing unit, and outputting a left-eye image and a right-eye image, which are generated by causing the stereo image generation processing unit to execute 2D-3D conversion processing for generating the left-eye image and the right-eye image for 3D image display through image conversion processing based on a single 2D image.

It should be noted that the program of the present disclosure is a program provided by, for example, a recording medium to, for example, an information processing apparatus and a computer system capable of executing various kinds of programs and codes. The processing according to the program is achieved by causing the program to be executed by the program executing unit of the information processing apparatus and the computer system.

Other purposes, features, and advantages of the present disclosure will become clear from the more detailed description based on the appended drawings and embodiments of the present disclosure explained below. The system in this specification is a logical configuration of a set of a plurality of apparatuses, and an apparatus of each configuration is not necessarily limited to be provided within the same housing.

### EFFECTS OF THE INVENTION

According to a configuration of an example of the present disclosure, an apparatus and a method are achieved, which can output stereo images that can be displayed as 3D even in any one of the case where a twin-lens camera captures images with the camera held horizontally or the case where the twin-lens camera captures images with the camera held vertically.

More specifically, the image processing apparatus includes an image input unit configured to receive, as input images, a left-eye image and a right-eye image which are captured from different view points, and an image-capturing angle determination unit configured to output a control signal according to an angle of a camera during image-capturing of the input images, wherein in a case where the control signal indicates a horizontally-captured image obtained by image-capturing with a twin-lens camera held horizontally, the left-eye image and the right-eye image which are the input images are output, and in a case where the control signal indicates a vertically-captured image obtained by image-capturing with the twin-lens camera held vertically, any one of the left-eye image and the right-eye image which are the input images is input into a stereo image generation processing unit, and a left-eye image and a right-eye image are output, which are generated by causing the stereo image generation processing unit to execute 2D-3D conversion processing based on a single image.

In this configuration, an apparatus and a method are achieved, which can output stereo images that can be displayed as 3D even in any one of the case where a twin-lens camera captures images with the camera held horizontally or the case where the twin-lens camera captures images with the camera held vertically.

### BRIEF DESCRIPTION OF DRAWINGS

Fig. 1 is a figure for explaining an example of image-capturing processing with a horizontally-held stereo camera having a twin-lens configuration.
Fig. 2 is a figure for explaining images obtained from the image-capturing processing with the horizontally-held stereo camera having the twin-lens configuration.

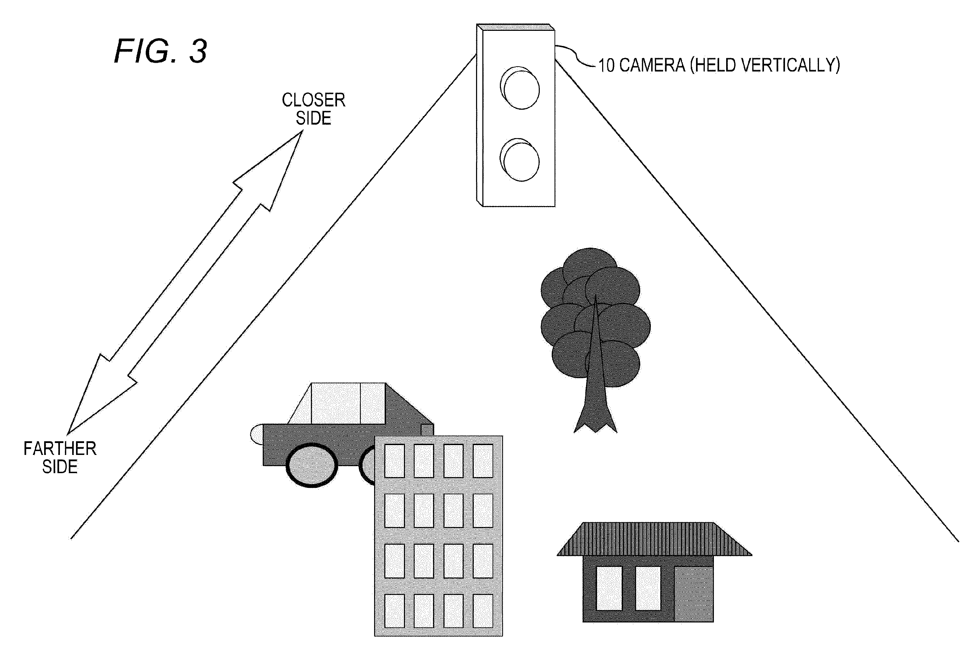

Fig. 3 is a figure for explaining an example of image-capturing processing with a vertically-held stereo camera having a twin-lens configuration.
Fig. 4 is a figure for explaining images obtained from the image-capturing processing with the vertically-held stereo camera having the twin-lens configuration.
Fig. 5 is a figure for explaining images obtained from the image-capturing processing with the vertically-held stereo camera having the twin-lens configuration.
Fig. 6 is a figure for explaining images obtained from the image-capturing processing with the horizontally-held stereo camera having the twin-lens configuration, and images obtained from the image-capturing processing with the vertically-held stereo camera having the twin-lens configuration.

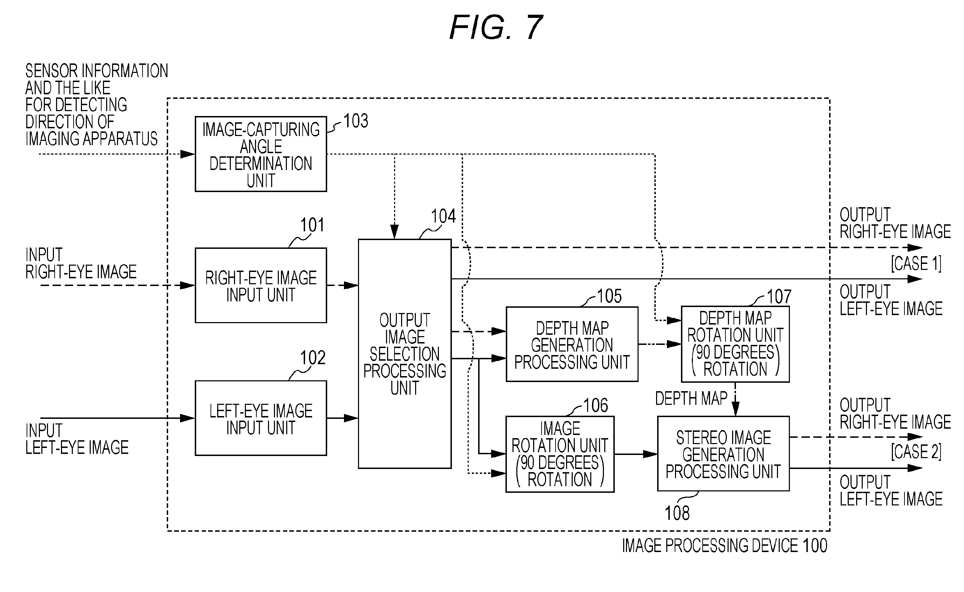

Fig. 7 is a figure for explaining a configuration of an example of an image processing apparatus according to the present disclosure.

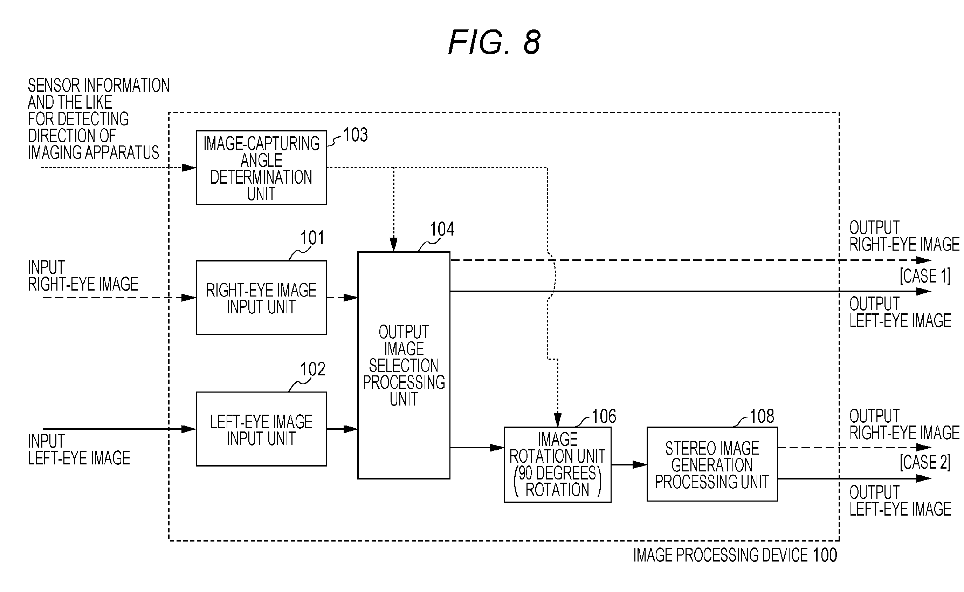

Fig. 8 is a figure for explaining a configuration of an example of an image processing apparatus according to the present disclosure.

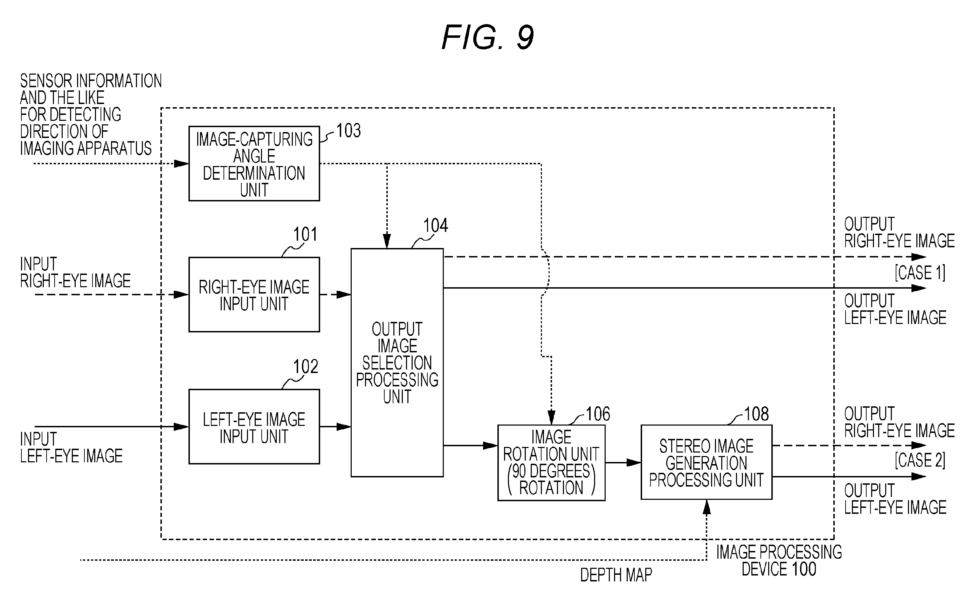

Fig. 9 is a figure for explaining a configuration of an example of an image processing apparatus according to the present disclosure.

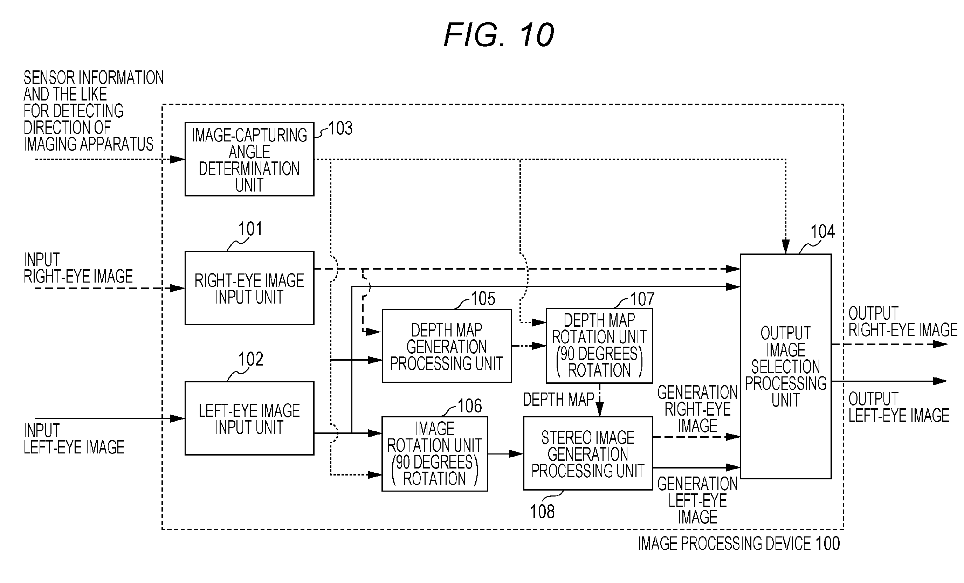

Fig. 10 is a figure for explaining a configuration of an example of an image processing apparatus according to the present disclosure.

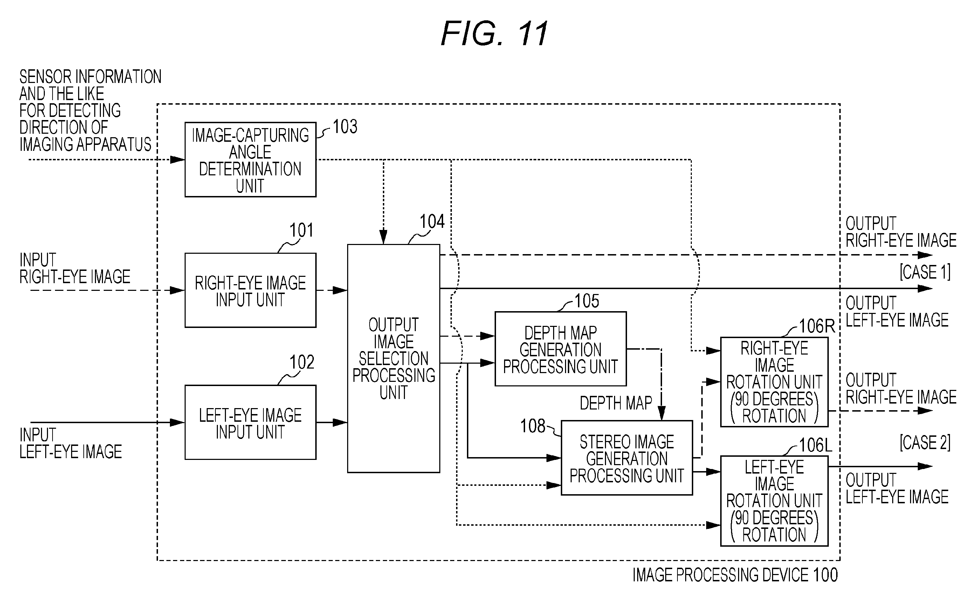

Fig. 11 is a figure for explaining a configuration of an example of an image processing apparatus according to the present disclosure.

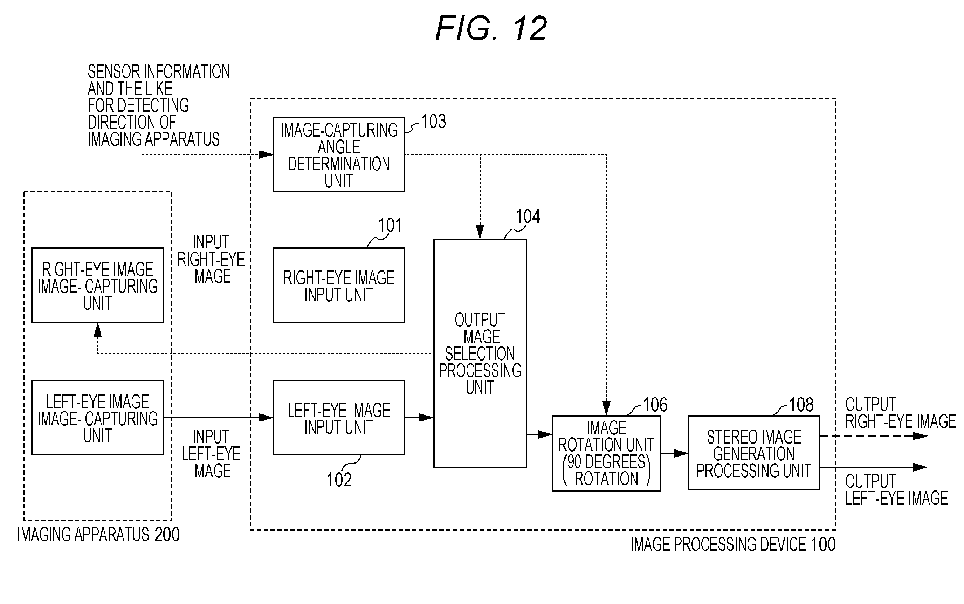

Fig. 12 is a figure for explaining a configuration of an example of an image processing apparatus according to the present disclosure.

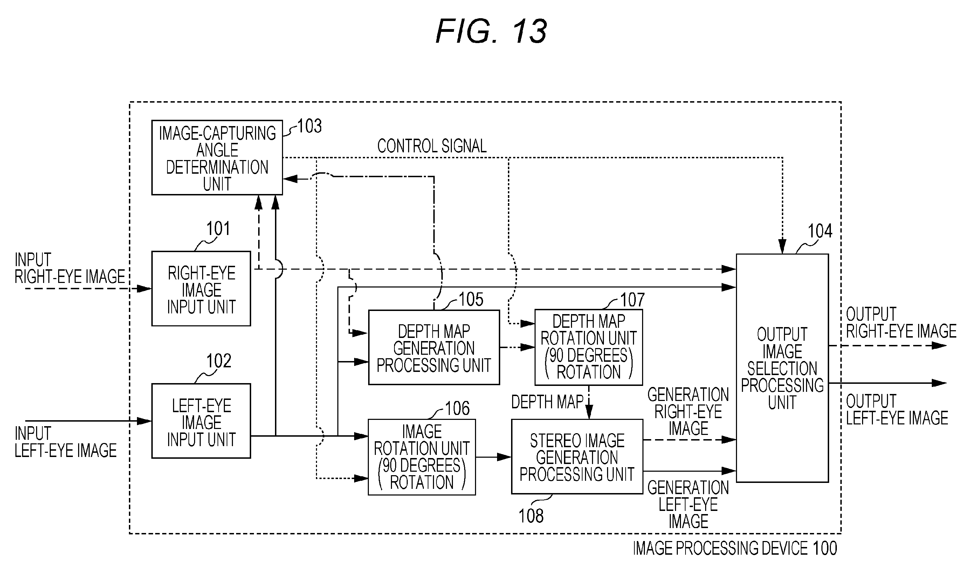

Fig. 13 is a figure for explaining a configuration of an example of an image processing apparatus according to the present disclosure.

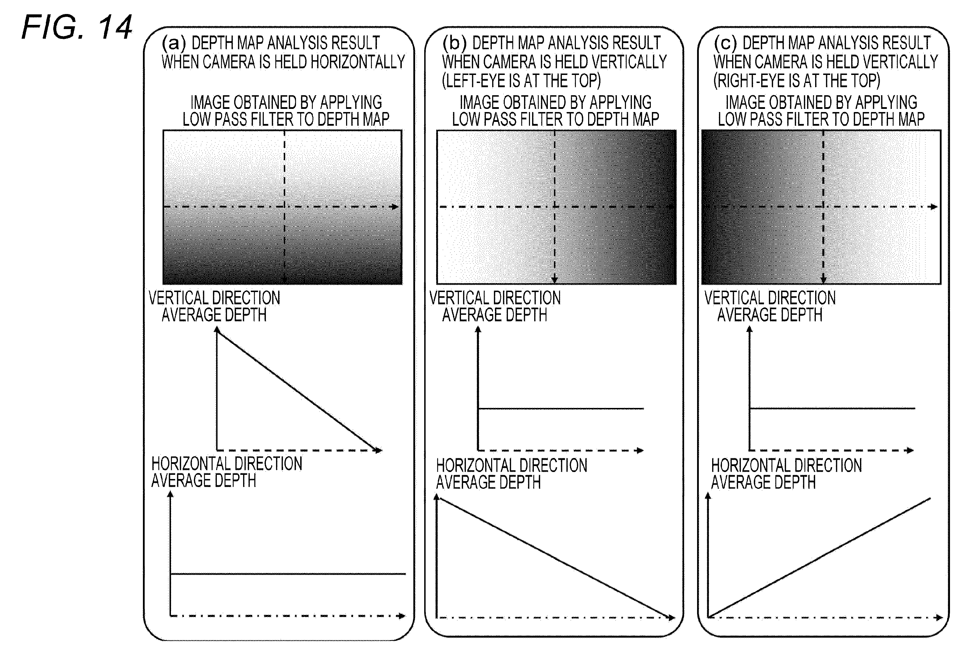

Fig. 14 is a figure for explaining image-capturing angle determination processing based on a depth map.

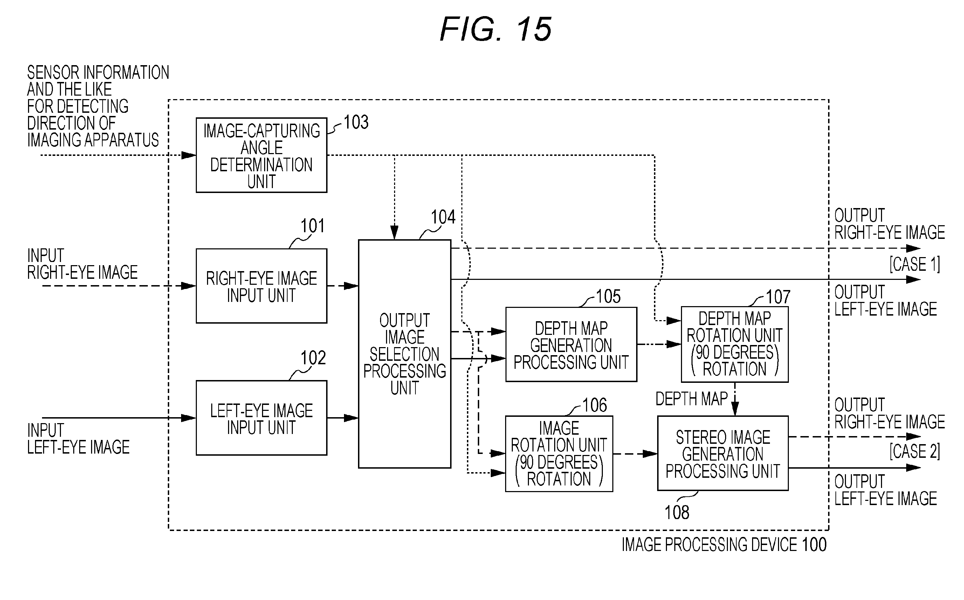

Fig. 15 is a figure for explaining a configuration of an example of an image processing apparatus according to the present disclosure.

### MODES FOR CARRYING OUT THE INVENTION

Hereinafter, an image processing apparatus, an image processing method, and a program according to the present invention will be explained in detail with reference to drawings. The explanation will be made according to the following items.
1. Example of configuration and processing of an image processing apparatus according to the present disclosure (Example 1)
2. Depth generation processing performed by a depth map generation processing unit
3. Example of configuration and processing of an image processing apparatus that does not generate any depth map therein (Example 2)
4. Example of configuration and processing of an image processing apparatus that receives a depth map from the outside (Example 3)
5. Example of configuration and processing performed by an image processing apparatus in which an output image selection processing unit is set as post-processing (Example 4)
6. Example of configuration and processing performed by an image processing apparatus that is configured not to rotate a depth map 90 degrees (Example 5)
7. Example of configuration and processing performed by an image processing apparatus having configuration for transmitting control signal to image-capturing apparatus (Example 6)
8. Example of configuration and processing performed by an image processing apparatus that executes image-capturing angle determination processing in an image-capturing angle determination unit by applying a depth map (Example 7)
9. Example of configuration and processing performed by an image processing apparatus where an image applied to 2D-3D conversion processing is right-eye image (Example 8)
10. Other examples
11. Summary of configuration of the present disclosure

### [1. Example of configuration and processing of image processing apparatus according to the present disclosure (Example 1)]

An example of configuration and processing of the image processing apparatus according to the present disclosure (Example 1) will be explained with reference to Fig. 7 and subsequent drawings.

Fig. 7 is a figure for explaining a configuration of an example of the image processing apparatus according to the present disclosure.

An image processing apparatus 100 includes a right-eye image input unit 101, a left-eye image input unit 102, an image-capturing angle determination unit 103, an output image selection processing unit 104, an image rotation unit 105, a depth map generation processing unit 106, a depth map rotation unit 107, and a stereo image generation processing unit 108.

The image processing apparatus 100 receives twin-lens stereo image signals. The input image signals are received two images, i.e., a right-eye image and left-eye image, via lenses that are set at two different positions as shown in Figs. 1 and 3.

It should be noted that the image-capturing processing is possible in any one of cases where a camera is held horizontally or a camera is held vertically.

The right-eye image and the left-eye image which are input into the image processing apparatus 100 are input into the right-eye image input unit 101 and the left-eye image input unit 102, respectively.

Further, the image-capturing angle determination unit 103 receives information required to determine the angle of the camera during image-capturing of input images, i.e., whether image-capturing is performed with the camera held horizontally or image-capturing is performed with the camera held vertically, for example, the image-capturing angle determination unit 103 receives sensor information and the like for detecting the direction of the image-capturing apparatus (camera). The image-capturing angle determination unit 103 uses such sensor information to determine the "image-capturing process with the camera held vertically" and the "image-capturing process with the camera held horizontally". It should be noted that it may be configured such that the user of the image-capturing apparatus may input whether the current image-capturing is performed with the camera "held vertically" or "held horizontally" using an input unit.

The determination result made by the image-capturing angle determination unit 103 is output, as a control signal, to the output image selection unit 104, the image rotation unit 106, and the depth map rotation unit 107.

The control signals that is output by the image-capturing angle determination unit 103 include three types of control signals: in a case of the "image-capturing process with the camera held horizontally", the control signal is "0"; in a case of the "image-capturing process with the camera held vertically", i.e., as shown in Fig. 2, the image-capturing apparatuses are determined to be arranged such that the left-eye side of the image-capturing apparatus is at the upper side (ceiling direction), the right-eye side is at the lower side (ground direction), the control signal is "1"; and in the case of the setting in which the camera is rotated 180 degrees with respect to the setting as shown in Fig. 2, i.e., the image-capturing apparatuses are determined to be arranged such that the right-eye side of the image-capturing apparatus is at the upper side (ceiling direction), the left-eye side is at the lower side (ground direction), the control signal is "2".

Both of the right and the left stereo images which are input into the right-eye image input unit 101 and the left-eye image input unit 102 of the image processing apparatus 100 are input into the output image selection processing unit 104. On the other hand, the control signal that is output from the image-capturing angle determination unit 103 is also input into the output image selection processing unit 104.

Fig. 7 illustrates two cases (1) case 1 [Case1], (2) case 2 [Case2], which are examples of image outputs of the image processing apparatus 100.

The case 1 [CASE1] is processing in a case where the control signal that is output by the image-capturing angle determination unit 103 is "0".

The case where the control signal that is output by the image-capturing angle determination unit 103 is "0" is a case where the image-capturing is performed while the image-capturing apparatus is held horizontally.

When the image-capturing processing is performed with the camera held horizontally, the output image selection processing unit 104 receives the control signal "0" from the image-capturing angle determination unit 103.

When the output image selection processing unit 104 receives the control signal "0" from the image-capturing angle determination unit 103, the output image selection processing unit 104 outputs the right and left stereo images, which have been input, as the output of the image processing apparatus 100 without any change. These right and left stereo images become an output right-eye image and an output left-eye image which are the outputs of the image processing apparatus 100.

On the other hand, the case 2 [CASE2] is processing where the control signal which is output by the image-capturing angle determination unit 103 is either "1" or "2".

The case where the control signal which is output by the image-capturing angle determination unit 103 is either "1" or "2" is a case of a vertical image-capturing in which the image-capturing apparatus is held vertically.

When the vertical image-capturing processing in which the camera is held vertically is performed, the image processing apparatus 100 converts, from 2D into 3D, one of the two images which are input into the right-eye image input unit 101 and the left-eye image input unit 102, and generates and outputs the left-eye image and the right-eye image serving as the stereo images.

The details of the flow of the processing of the case 2 [CASE2] will be explained.

In the case where the image-capturing processing with the camera held vertically is performed, the output image selection processing unit 104 receives the control signal "1" or "2" from the image-capturing angle determination unit 103.

When the output image selection processing unit 104 receives the control signal "1" or "2" from the image-capturing angle determination unit 103, first, the output image selection processing unit 104 gives the received right and left stereo images to the depth map generation processing unit 105. The depth map generation processing unit 105 performs stereo matching processing, and generates and outputs a depth map.

The depth map generation processing unit 105 executes stereo matching processing of the received two images, and on the basis of the amount of the deviation between corresponding pixel positions, the depth map generation processing unit 105 calculates the distance of each pixel position to the subject (depth), i.e., a subject distance from the camera.

The depth map generation processing unit 105 generates and outputs the depth map in which each pixel of the input image is associated with distance information.

The depth map is data indicating a subject distance of a subject at a pixel constituting an image (distance from the camera), and, for example, the depth map is constituted by an image that is shown by converting the distance information of a subject at each pixel of an image into brightness information.

More specifically, for example, an image configured as follows is used as the depth map, in which a pixel having a subject of which subject distance is smaller (closer to the camera) is a high brightness pixel (bright pixel), and a pixel having a subject of which subject distance is larger (farther from the camera) is a low brightness pixel (dark pixel). As described above, the depth map is data for holding the distance of a subject included in an image as pixel associated data, and more specifically, the depth map is generated as image data in which, for example, the subject distance is converted into a pixel value and set.

Further, the output image selection processing unit 104 inputs any one of the right and left stereo images, which have been received, (left-eye image in this example) into the stereo image generation processing unit 108. Before the input, the image rotation unit 106 rotates the input left-eye image 90 degrees, and converts it into vertically-long image data.

During this rotation processing, the image rotation unit 106 determines the rotation direction using the control signal that is output from the image-capturing angle determination unit 103. The rotation processing is performed, in which the top and bottom of the image signal is correctly set in accordance with whether the control signal is "1" or "2".

The depth map that is output from the depth map generation processing unit 105 is also subjected to the rotation processing by the depth map rotation unit 107.

The depth map rotation unit 107 also determines the rotation direction using the control signal that is output by the image-capturing angle determination unit 103. The rotation processing is performed, in which the top and bottom of the image signal is correctly set in accordance with whether the control signal is "1" or "2".

The image and the depth map which have been subjected to the rotation processing to be made into correct vertical orientation are input into the stereo image generation processing unit 108.

The stereo image generation processing unit 108 generates the pair of the left-eye image and the right-eye image serving as the stereo images from one of the right and left stereo images, which have been input, (the left-eye image in this example).

More specifically, the stereo image generation processing unit 108 generates, on the basis of the single 2D image, the left-eye image and the right-eye image having the parallax that is set to be applied to the 3D image display. So-called 2D-3D conversion processing is executed to generate the stereo images. It should be noted that, in this 2D-3D conversion processing, parallax setting processing is executed in accordance with the subject distance (depth) obtained from the depth map.

It should be noted that the stereo image generation processing based on the 2D-3D conversion processing including parallax setting according to the subject distance (depth) can employ processing described in JP 2011-124935 A which was filed previously by the applicant of the present application.

When the image processing apparatus 100 receives images captured through image-capturing process with the camera held vertically, the right-eye image and the left-eye image generated in the 2D-3D conversion processing by the stereo image generation processing unit 108 are adopted as the output images of the image processing apparatus 100.

As described above, when the left-eye image and the right-eye image which are input into the image processing apparatus are the images captured with the camera held horizontally, the image processing apparatus 100 as shown in Fig. 7 outputs the left-eye image and the right-eye image without any change, and when the left-eye image and the right-eye image which are input into the image processing apparatus are the images captured with the camera held vertically, the image processing apparatus 100 as shown in Fig. 7 rotates any one of the images 90 degrees, generates the left-eye image and the right-eye image through the 2D-3D conversion processing, and outputs the images thus generated.

These output images are displayed on the 3D image display device. With this processing, both of the image captured with the camera held horizontally and the images captured with the camera held vertically are displayed such that the pair of the left-eye image and the right-eye image having the parallax that is set in the horizontal direction are displayed on the 3D display device, so that this enables the 3D images to be displayed in such a manner that the viewer can feel stereoscopic feeling.

### [2. Depth generation processing performed by a depth map generation processing unit]

Subsequently, a specific example of depth map generation processing executed by the depth map generation processing unit 105 will be explained.

As explained above, the depth map is data indicating a subject distance of a subject at a pixel constituting an image (distance from the camera), and, for example, the depth map is constituted by an image that is shown by converting the distance information of a subject at each pixel of an image into brightness information.

More specifically, for example, an image configured as follows is used as the depth map, in which a pixel having a subject of which subject distance is smaller (closer to the camera) is a high brightness pixel (bright pixel), and a pixel having a subject of which subject distance is larger (farther from the camera) is a low brightness pixel (dark pixel).

As described above, the depth map is data for holding the distance of a subject included in an image as pixel associated data, and more specifically, the depth map is generated as image data in which, for example, the subject distance is converted into a pixel value and set.

The depth map generation processing executed by the depth map generation processing unit 105 may employ generally-used method using stereo matching.

More specifically, the distance of a subject in an image from the camera can be calculated by deriving association between a plurality of images obtained from different view points, i.e., the left-eye image and the right-eye image which are input into the image processing apparatus 100 in this example.

Many methods have been suggested as the method for deriving the association between images obtained from a plurality of view points with a high degree of accuracy or at a high speed.

For example, as a method for deriving association between images with a high degree of accuracy, JP 2003-085566 A discloses a method for allocating optimum association to pixel rows on a horizontal scanning line on the basis of Viterbi algorithm which is a type of Dynamic Programming.

On the other hand, as a method for deriving association between images at a high speed, JP 07-103734 A discloses a method for reducing an image to form a hierarchical structure, and transmitting a result of association detection in a level of a low resolution to a level of a high resolution, thus reducing association search processing at the level of the high resolution.

By applying, for example, the above exiting methods, the depth map generation processing unit 105 of the image processing apparatus 100 as shown in Fig. 1 can perform the depth map generation processing.

### [3. Example of configuration and processing of image processing apparatus that does not generate any depth map therein (Example 2)]

Subsequently, an example of configuration and processing performed by an image processing apparatus that does not generate any depth map therein will be explained as Example 2.

Fig. 8 is a figure for explaining a configuration of an image processing apparatus 100 that does not generate any depth map therein.

The difference from the image processing apparatus as shown in Fig. 7 explained above lies in that the depth map generation processing unit 105 and the depth map rotation unit 107 as shown in Fig. 7 are not provided.

A stereo image generation unit 108 of the image processing apparatus 100 as shown in Fig. 8 generates the left-eye image and the right-eye image serving as the stereo images from a single image which is received from the image rotation unit 106, i.e., a single left image in this example, without using any depth map.

The 2D-3D conversion processing for generating the left-eye image and the right-eye image serving as the 3D images from a single 2D image without using any depth map is described in JP 2010-063083 A which is the prior application of the same applicant as the present patent application.

The stereo image generation unit 108 of the image processing apparatus 100 as shown in Fig. 8 employs the method described in, for example, JP 2010-063083 A to generate the left-eye image and the right-eye image serving as the 3D images from a single 2D image.

### [4. Example of configuration and processing of image processing apparatus that receives a depth map from the outside (Example 3)]

Subsequently, an example of configuration and processing of an image processing apparatus that receives a depth map from the outside (Example 3) will be explained with reference to Fig. 9.

The image processing apparatus 100 as shown in Fig. 9 is different from the image processing apparatus as shown in Fig. 7 explained above in that the image processing apparatus 100 as shown in Fig. 9 does not have the depth map generation processing unit 105 and the depth map rotation unit 107 as shown in Fig. 7.

More specifically, the image processing apparatus 100 as shown in Fig. 9 is similar to the image processing apparatus as shown in Fig. 8.

However, the image processing apparatus 100 as shown in Fig. 9 has a configuration different from the configuration shown in Fig. 8 in that the image processing apparatus 100 as shown in Fig. 9 receives a depth map from the outside.

The stereo image generation unit 108 of the image processing apparatus 100 as shown in Fig. 9 uses a depth map received from the outside to generate the left-eye image and the right-eye image serving as the stereo images from a single image received from the image rotation unit 106, i.e., a single left-eye image in this example.

For example, the image-capturing apparatus obtains a depth map and inputs the depth map into the image processing apparatus. For example, the image-capturing apparatus has a function of measuring the subject distance such as a range sensor. The image-capturing apparatus generates a depth map on the basis of the measured subject distance information and outputs the depth map to the image processing apparatus 100. The stereo image generation processing unit 108 uses the depth map received from the outside to generate the right and left stereo images, and outputs the right and left stereo images.

### [5. Example of configuration and processing performed by an image processing apparatus in which output image selection processing unit is set as post-processing (Example 4)]

Subsequently, an example of configuration and processing performed by an image processing apparatus in which output image selection processing unit is set as post-processing (Example 4) will be explained with reference to Fig. 10.

The image processing apparatus 100 as shown in Fig. 10 is different from the image processing apparatus as shown in Fig. 7 explained above in that an output image selection processing unit 104 is set as the final processing unit of the image processing apparatus 100.

Since the output image selection processing unit 104 is configured to be set at a later stage, the stereo image generation processing unit 108 performs the stereo image generation processing on the basis of the 2D-3D conversion processing at all times.

The output image selection processing unit 104 receives each of the following images at all times: (1) a right-eye image given by the right-eye image input unit 101, (2) a left-eye image given by the left-eye image input unit 102, (3) stereo images including the left-eye image and the right-eye image generated by the 2D-3D conversion processing based on a single image by the stereo image generation processing unit 108.

In accordance with the input signal given by the image-capturing angle determination unit 103, the output image selection processing unit 104 outputs any one of (1) a right-eye image given by the right-eye image input unit 101, (2) a left-eye image given by the left-eye image input unit 102, or (3) stereo images including the left-eye image and the right-eye image generated by the 2D-3D conversion processing based on a single image by the stereo image generation processing unit 108, or a pair of images of (1), (2) explained above, or a pair of images of (3).

In a case where the control signal that is output by the image-capturing angle determination unit 103 is "0", and more specifically, in a case of ordinary horizontal image-capturing process where the image-capturing apparatus is held horizontally, the output image selection processing unit 104 outputs the right and left stereo images, which have been input, without any change. More specifically, the pair of images of (1), (2) explained above are output as the output right-eye image and the output left-eye image.

On the other hand, in a case where the control signal that is output by the image-capturing angle determination unit 103 is either "1" or "2", and more specifically, in a case where the image-capturing apparatus is held vertically, the output image selection processing unit 104 outputs the images of (3). The stereo images including the left-eye image and the right-eye image generated by the 2D-3D conversion processing based on a single image by the stereo image generation processing unit 108 are adopted as the output images.

### [6. Example of configuration and processing performed by image processing apparatus that does not rotate depth map 90 degrees (Example 5)]

Subsequently, an example of configuration and processing performed by an image processing apparatus that is configured not to rotate a depth map 90 degrees (Example 5) will be explained with reference to Fig. 11.

The image processing apparatus 100 as shown in Fig. 11 is different from the image processing apparatus as shown in Fig. 7 explained above in that the image processing apparatus 100 as shown in Fig. 11 does not have the depth map rotation unit 107 as shown in Fig. 7, but has the image rotation unit 106 as shown in Fig. 7 arranged at a stage after the stereo image generation processing unit 108 in such a manner that the image rotation unit 106 as shown in Fig. 7 is configured to be a right-eye image rotation unit 106R and a left-eye image rotation unit 106L.

In this configuration, as shown in Fig. 11, the stereo image generation processing unit 108 directly receives a single image that is not rotated 90 degrees (the left-eye image in this example)) from the output image selection unit 104. On the other hand, the stereo image generation processing unit 108 directly receives a depth map generated by the depth map generation processing unit 105.

The stereo image generation processing unit 108 performs 2D-3D conversion processing using the depth map and the single 2D image that is not subjected to the rotation processing, thus generating two images having the parallax in the vertical direction.

Thereafter, the two parallax setting images are input into the right-eye image rotation unit 106R and the left-eye image rotation unit 106L, and are rotated 90 degrees, so that the right-eye image rotation unit 106R and the left-eye image rotation unit 106L generate and output the images reflecting the vertical direction of the actual subject.

It should be noted that the right-eye image rotation unit 106R and the left-eye image rotation unit 106L receive the control signal according to the image-capturing angle from the image-capturing angle determination unit 103.

The right-eye image rotation unit 106R and the left-eye image rotation unit 106L execute the rotation processing based on the control signal in accordance with the image-capturing angle received from the image-capturing angle determination unit 103, and generate and output the images reflecting the vertical direction of the actual subject.

### [7. Example of configuration and processing performed by image processing apparatus having configuration for transmitting control signal to image-capturing apparatus (Example 6)]

In a case where the image processing apparatus 100 performs image-capturing process with the camera held vertically, the stereo image generation processing unit 108 generate and output the left-eye image and the right-eye image serving as the stereo images generated through the 2D-3D conversion processing based on any one of the left-eye image and the right-eye image.

Therefore, when the image-capturing is performed with the camera held vertically, any one of the two images including the left-eye image and the right-eye image is unnecessary. More specifically, it is sufficient to capture only any one of the left-eye image and the right-eye image, and it is not necessary to perform image-capturing processing for the other of the images.

When the image-capturing is executed with the camera held vertically in view of the above circumstances, the image processing apparatus as shown in Fig. 12 of the present example performs control so as to capture only one of the two images including the left-eye image and the right-eye image.

Image processing apparatus as shown in Fig. 12 illustrates an example of configuration in a case where such image-capturing control is performed.

The image processing apparatus 100 outputs the control signal to an image-capturing apparatus 200.

In a case where the control signal of the image-capturing angle determination unit 103 of the image processing apparatus 100 as shown in Fig. 12 is a control signal indicating the image-capturing process with the camera held vertically, the output image selection processing unit 104 outputs an image-capturing stop command signal, or an input stop command of the captured image to the right-eye image image-capturing unit of the image-capturing apparatus 200.

In such setting, the image processing apparatus 100 does not receive unnecessary useless right-eye image.

In such configuration, the input of the right-eye image is controlled, so that the band width is reduced, and the power consumption can be reduced.

### [8. Example of configuration and processing performed by image processing apparatus that executes image-capturing angle determination processing in image-capturing angle determination unit by applying depth map (Example 7)]

Subsequently, an example of configuration and processing performed by an image processing apparatus that executes image-capturing angle determination processing in an image-capturing angle determination unit by applying a depth map (Example 7) will be explained.

In the above examples, the image-capturing angle determination processing in the image-capturing angle determination unit 103 is configured to be performed using input of information given from the outside, but a method for making determination using only the received image information may be considered.

Fig. 13 is a figure for explaining a configuration of an image processing apparatus according to the present example.

The image processing apparatus 100 as shown in Fig. 13 is modified to a configuration in which the image-capturing angle determination unit 103 does not receive sensor information and the like for detecting the direction of the image-capturing apparatus. In the configuration of Fig. 13, the image-capturing angle determination unit 103 receives an input right-eye image, an input left-eye image, and a depth map generated by the depth map generation processing unit 105 using the right and the left stereo images.

The image-capturing angle determination unit 103 uses the information to determine whether the user executes the image-capturing process with the camera held vertically, or the image-capturing process with the camera held horizontally.

In order for the image-capturing angle determination unit 103 to determine in which direction the image-capturing apparatus is held to perform the image-capturing process from any one of the right and the left image signals or both of the image signals, for example, it is possible to apply (a) image-capturing angle determination processing based on detection processing of the face of a person in a captured image, (b) image-capturing angle determination processing based on detection processing of the body of a person in a captured image, (c) image-capturing angle determination processing based on detection processing of a sky area in a captured image, (d) image-capturing angle determination processing based on detection processing of a horizontal line in a captured image, and any one of the processing (a) to the processing (d).

The processing (a) to the processing (d) may employ already-available techniques. For example,
(a) the image-capturing angle determination processing based on detection processing of the face of a person in a captured image is described in the following document; P. Viola, M. Jones: Robust Real-time Object Detection, IJCV 2001.
(b) the image-capturing angle determination processing based on detection processing of the body of a person in a captured image is described in the following document;
   N. Dalal, B. Triggs: Histograms of Oriented Gradients for Human Detection, CVPR 2005.
(c) the image-capturing angle determination processing based on detection processing of a sky area in a captured image is described in the following document;
   J. Luo, Etz S.P.: A Physical Model-Based Approach to Detecting Sky in Photographic Images. IEEE Trans. on Image Processing, Vol.11 Issue3, 2002.
(d) The image-capturing angle determination processing based on detection processing of a horizontal line in a captured image is described in the following document;
   S. T. Barnard: Interpreting perspective images. Artificial Intelligence 21, 1983.

The image-capturing angle determination unit 103 can use these already-available techniques to determine whether the user executes the image-capturing process with the camera held vertically, or executes the image-capturing process with the camera held horizontally.

The method using the depth map generated by the depth map generation processing unit 105 may employ, for example a method generating and using a depth map analysis result as shown in Fig. 14.

Fig. 14 shows (a) an analysis result of a depth map with respect to an image captured with a stereo camera held horizontally, (b) an analysis result of a depth map with respect to an image captured with a stereo camera held vertically (left-eye image is at the upper side), and (c) an analysis result of a depth map with respect to an image captured with a stereo camera held vertically (right-eye image is at the upper side).

All of (a) to (c) show three pieces of data including a result obtained by applying a spatial low pass filter (LPF) to a depth map, average depth data in the vertical direction obtained from the LPF-applied image (horizontal axis is a pixel position in the vertical direction, and the vertical axis is a depth), and average depth data in the horizontal direction obtained from the LPF-applied image (horizontal axis is a pixel position in the horizontal direction, and the vertical axis is a depth), which are arranged from the top to the bottom of Fig. 14.

The depth map and the LPF-applied result thereof are expressed in such a manner that the farther the subject distance (depth) is, the higher the brightness is, and the closer the subject distance (depth) is, the lower the brightness is.

On the basis of the LPF-applied depth map shown at the top, each of the following data are calculated; a distribution of the average depth in the vertical direction (average value for each row) shown in the middle of Fig. 14, and a distribution of the average depth in the horizontal direction (average value for each column) shown at the bottom of Fig. 14.

As can be seen from the distributions of the average depths as shown in the middle and at the bottom of Fig. 14, the distribution of the average depth in the vertical direction in the image captured with the camera held horizontally has such tendency of distribution that, with respect to the vertical axis of the image, a coordinate at the top portion has a higher (a farther) value.

The distribution of the average depth in the horizontal direction has such tendency that, with respect to the horizontal coordinate of the image, there is hardly inclination, and the distribution tends to be flat.

The distribution of the average depth in the vertical direction in the image captured with the camera held vertically has such tendency that, with respect to the vertical coordinate of the image, there is hardly inclination, and the distribution tends to be flat. This is applicable regardless of whether which of the right and the left eye is at the top.

On the other hand, the distribution of the average depth in the horizontal direction has such tendency of distribution that, with respect to the horizontal coordinate of the image, when the image is captured with the left eye being at the top, a coordinate at the left portion has a higher (a farther) value, and when the image is captured with the right eye being at the top, a coordinate at the right portion has a higher (a farther) value.

As described above, the distributions of the average depths in the vertical/horizontal directions tend to be different distributions according to the direction of the image-capturing apparatus.

The image-capturing angle determination unit 103 receives the depth map generated by the depth map generation processing unit 105, and generates analysis data as shown in Fig. 14, and determines whether the image is captured with the camera held horizontally or with the camera held vertically on the basis of the analysis data generated, and further, when the image is captured with the camera held vertically, the image-capturing angle determination unit 103 determines whether the left-eye image is at the top or the right-eye image is at the top.

In accordance with the determination result, the control signals (0 to 2) explained above are generated and output.

### [9. Example of configuration and processing performed by image processing apparatus where mage applied to 2D-3D conversion processing is right-eye image (Example 8)]

In the explanation about the above examples, for example, a processing target image of the 2D/3D conversion processing executed by the stereo image generation processing unit 108 is the left-eye image. Alternatively, the processing target image of the 2D/3D conversion processing executed by the stereo image generation processing unit 108 may be a right-eye image.

Unlike the image processing apparatus as shown in Fig. 7, the image processing apparatus as shown in Fig. 15 is configured such that a stereo image generation processing unit 108 receives a right-eye image.

The stereo image generation processing unit 108 receives the right-eye image, and executes the 2D-3D conversion processing based on the right-eye image, thus generating and outputting the left-eye image and the right-eye image serving as the stereo images.

In examples 2 to 7 explained above, the stereo image generation processing unit 108 may be configured to receive the right-eye image, and may be configured to execute the 2D-3D conversion processing based on the right-eye image, thus generating and outputting the left-eye image and the right-eye image serving as the stereo images.

It should be noted that whether 2D-3D conversion processing based on the left-eye image is executed or 2D-3D conversion processing based on the right-eye image is executed may be configured to be selected and applied in the stereo image generation processing unit 108.

For example, the determination processing for selecting an image may be, e.g., processing mode for determining which of the images is to be processed in accordance with the control signal which is given from the image-capturing angle determination unit 103 to the output image selection processing unit 104.

For example, the image captured at the upper side of the image-capturing apparatus held vertically (ceiling direction) is configured to be selected as the processing target.

In such setting, in a case where the received control signal is "1", the image at the left side can be selected as the 2D-3D conversion target image, and in a case where the received control signal is "2", the image at the right side can be selected as the 2D-3D conversion target image, and the image can be selected and output to the stereo image generation processing unit 108.

A method may be considered, which, for example, determines and selects which of the right and the left image appears to be preferable when seen from the eyes of a person as other selection criteria. For example, a method for selecting one in which a main subject is more close to the center of the composition, or selecting one in which the focus position better matches. An image evaluation unit for executing the determination information is configured in the image processing apparatus 100, and the evaluation result of the image evaluation unit is input into the output image selection processing unit 104.

The output image selection processing unit 104 selects an image of a high degree of evaluation in accordance with the received evaluation result, and outputs the image to the stereo image generation processing unit 108.

It should be noted that processing for automatically evaluating, from among the captured images, an image which is preferable in all the perspectives may employ, for example, the configuration described in JP 2010-119097 A.

### [10. Other examples]

In the examples explained above, the images which are input into the image processing apparatus 100 are considered to be the right and the left stereo images obtained by the twin-lens image-capturing apparatus having the right and left image-capturing elements. However, the image which is input into the image processing apparatus 100 may be an input of the right and the left stereo image obtained by a stereo image image-capturing apparatus having a single lens.

It should be noted that image-capturing and generation processing of the right and the left stereo images using an image-capturing apparatus having a single-lens configuration that is not the twin-lens configuration may be, for example, the configuration described in JP 2011-35853 A.

Like the configuration described in JP 2011-35853 A, the right and the left stereo images using the image-capturing apparatus having the single-lens configuration may be adopted as the input.

### [11. Summary of configuration of the present disclosure]

The configuration of the present disclosure has been hereinabove explained in detail with reference to specific examples. However, it is to be understood that a person skilled in the art could modify the examples and use alternatives without deviating from the gist of the present disclosure. In other words, the present invention has been disclosed in a form of examples, and the present invention is not to be interpreted in a limited manner. In order to determine the gist of the present invention, claims should be referred to.

It should be noted that the techniques disclosed in this specification may be configured as follows.
(1) An image processing apparatus including:
   an image input unit configured to receive, as input images, a left-eye image and a right-eye image which are captured from different view points; and
   an image-capturing angle determination unit configured to output a control signal according to an angle of a camera during image-capturing of the input images,
   wherein in a case where the control signal indicates a horizontally-captured image obtained by image-capturing process with a twin-lens camera held horizontally, the left-eye image and the right-eye image which are the input images are output, and
   in a case where the control signal indicates a vertically-captured image obtained by image-capturing process with the twin-lens camera held vertically, any one of the left-eye image and the right-eye image is input into a stereo image generation processing unit, and a left-eye image and a right-eye image are output, which are generated by causing the stereo image generation processing unit to execute 2D-3D conversion processing for generating the left-eye image and the right-eye image for 3D image display through image conversion processing based on a single 2D image.
(2) The image processing apparatus according to (1), wherein the image processing apparatus includes a depth map generation processing unit for generating a depth map based on the input image, and the stereo image generation processing unit applies the depth map to execute the 2D-3D conversion processing in which a parallax is set in accordance with a subject distance, thus generating the left-eye image and the right-eye image.
(3) The image processing apparatus according to (1) or (2), wherein the image processing apparatus includes: an image rotation unit configured to rotate, 90 degrees, an image that is input into the stereo image generation processing unit; a depth map generation processing unit configured to generate a depth map on the basis of the input image; and a depth map rotation unit configured to rotate, 90 degrees, the depth map generated by the depth map generation processing unit, wherein the stereo image generation processing unit receives the image rotated 90 degrees from the image rotation unit and the depth map rotated 90 degrees from the depth map rotation unit, and generates the left-eye image and the right-eye image by executing the 2D-3D conversion processing in which a parallax is set in accordance with a subject distance on the basis of the input data.
(4) The image processing apparatus according to any one of (1) to (3), wherein the image-capturing angle determination unit generates and outputs a control signal with which three types of image-capturing angles (a) to (c) as described below can be determined:
   (a) the input image is a horizontally-captured image obtained by image-capturing process with a twin-lens camera held horizontally;
   (b) the input image is a vertically-captured image obtained by image-capturing process with a twin-lens camera held vertically, wherein the input image is the captured image in which the left side of the camera is at the top and the right side of the camera is at the bottom; and
   (c) the input image is a vertically-captured image obtained by image-capturing process with a twin-lens camera held vertically, wherein the input image is the captured image in which the left side of the camera is at the bottom and the right side of the camera is at the top.
(5) The image processing apparatus according to any one of (1) to (4), wherein the stereo image generation processing unit generates the left-eye image and the right-eye image by executing 2D-3D conversion processing to which a depth map is not applied.
(6) The image processing apparatus according to any one of (1) to (5), wherein the image processing apparatus has a configuration for receiving a depth map based on the input image from an outside, and the stereo image generation processing unit generates the left-eye image and the right-eye image by executing the 2D-3D conversion processing in which a parallax is set in accordance with a subject distance by applying the depth map received from the outside.
(7) The image processing apparatus according to (1) to (6), wherein in a case where the control signal indicates a vertically-captured image obtained by image-capturing process with the twin-lens camera held vertically, the image processing apparatus outputs, to the image-capturing apparatus, a control signal for receiving any one of the left-eye image and the right-eye image, or a control signal for capturing any one of the left-eye image and the right-eye image.
(8) The image processing apparatus according to any one of (1) to (7), wherein the image processing apparatus has a depth map generation processing unit for generating a depth map based on the input image, and the image-capturing angle determination unit executes analysis processing of the depth map, and determines an angle of a camera during image-capturing of the input image on the basis of an analysis result, and outputs a control signal according to a determination result.

Further, a method of processing executed by the apparatus explained above and the like, and a program executing the processing are also included in the configuration of the present disclosure.

The series of processing explained in the specification may be executed by hardware, software, or composite configuration of them both. When the series of processing is executed by software, a program recording a processing sequence is installed to a memory in a computer incorporated into dedicated hardware, or the program may be installed to a general-purpose computer capable of executing various kinds of processing, and the program may be caused to be executed. For example, the program may be recorded to a recording medium in advance. In addition to installation from the recording medium to a computer, the program may also be received via a network such as a LAN (Local Area Network) and the Internet, and may be installed to a recording medium such as an internal hard disk.

It should be noted that various kinds of processing described in the specification are not limited to execution in time series as described therein. Alternatively, various kinds of processing can be executed in parallel or individually, in accordance with the performance of processing of the apparatus executing the processing or as necessary. In this specification, a system is a logical configuration of a set of a plurality of apparatuses, and an apparatus of each configuration is not necessarily limited to be provided within the same housing.

### INDUSTRIAL APPLICABILITY

As described above, according to a configuration of an example of the present disclosure, an apparatus and a method are achieved, which can output stereo images that can be displayed as 3D even in any one of the case where a twin-lens camera captures images with the camera held horizontally or the case where the twin-lens camera captures images with the camera held vertically.

More specifically, the image processing apparatus includes an image input unit configured to receive, as input images, a left-eye image and a right-eye image which are captured from different view points, and an image-capturing angle determination unit configured to output a control signal according to an angle of a camera during image-capturing of the input images, wherein in a case where the control signal indicates a horizontally-captured image obtained by image-capturing with a twin-lens camera held horizontally, the left-eye image and the right-eye image which are the input images are output, and in a case where the control signal indicates a vertically-captured image obtained by image-capturing with the twin-lens camera held vertically, any one of the left-eye image and the right-eye image which are the input images is input into a stereo image generation processing unit, and a left-eye image and a right-eye image are output, which are generated by causing the stereo image generation processing unit to execute 2D-3D conversion processing based on a single image.

In this configuration, an apparatus and a method are achieved, which can output stereo images that can be displayed as 3D even in any one of the case where a twin-lens camera captures images with the camera held horizontally or the case where the twin-lens camera captures images with the camera held vertically.

### REFERENCE SIGNS LIST

- 100: image processing apparatus
- 101: right-eye image input unit
- 102: left-eye image input unit
- 103: image-capturing angle determination unit
- 104: output image selection processing unit
- 105: depth map generation processing unit
- 106: image rotation unit
- 106a: right-eye image rotation unit
- 106b: left-eye image rotation unit
- 107: depth map rotation unit
- 108: stereo image generation processing unit

## Claims

1. An image processing apparatus comprising:
an image input unit configured to receive, as input images, a left-eye image and a right-eye image which are captured from different view points; and
an image-capturing angle determination unit configured to output a control signal according to an angle of a camera during image-capturing of the input images,
wherein in a case where the control signal indicates a horizontally-captured image obtained by image-capturing process with a twin-lens camera held horizontally, the left-eye image and the right-eye image which are the input images are output, and
in a case where the control signal indicates a vertically-captured image obtained by image-capturing process with the twin-lens camera held vertically, any one of the left-eye image and the right-eye image is input into a stereo image generation processing unit, and a left-eye image and a right-eye image are output, which are generated by causing the stereo image generation processing unit to execute 2D-3D conversion processing for generating the left-eye image and the right-eye image for 3D image display through image conversion processing based on a single 2D image.

2. The image processing apparatus according to claim 1,
wherein the image processing apparatus includes a depth map generation processing unit for generating a depth map based on the input image, and
the stereo image generation processing unit applies the depth map to execute the 2D-3D conversion processing in which a parallax is set in accordance with a subject distance, thus generating the left-eye image and the right-eye image.

3. The image processing apparatus according to claim 1, wherein the image processing apparatus includes:
an image rotation unit configured to rotate, 90 degrees, an image that is input into the stereo image generation processing unit;
a depth map generation processing unit configured to generate a depth map on the basis of the input image; and
a depth map rotation unit configured to rotate, 90 degrees, the depth map generated by the depth map generation processing unit,
wherein the stereo image generation processing unit receives the image rotated 90 degrees from the image rotation unit and the depth map rotated 90 degrees from the depth map rotation unit, and generates the left-eye image and the right-eye image by executing the 2D-3D conversion processing in which a parallax is set in accordance with a subject distance on the basis of the input data.

4. The image processing apparatus according to claim 1, wherein the image-capturing angle determination unit generates and outputs a control signal with which three types of image-capturing angles (a) to (c) as described below can be determined:
(a) the input image is a horizontally-captured image obtained by image-capturing process with a twin-lens camera held horizontally;
(b) the input image is a vertically-captured image obtained by image-capturing process with a twin-lens camera held vertically, wherein the input image is the captured image in which the left side of the camera is at the top and the right side of the camera is at the bottom; and
(c) the input image is a vertically-captured image obtained by image-capturing process with a twin-lens camera held vertically, wherein the input image is the captured image in which the left side of the camera is at the bottom and the right side of the camera is at the top.

5. The image processing apparatus according to claim 1, wherein the stereo image generation processing unit generates the left-eye image and the right-eye image by executing 2D-3D conversion processing to which a depth map is not applied.

6. The image processing apparatus according to claim 1, wherein the image processing apparatus has a configuration for receiving a depth map based on the input image from an outside, and
the stereo image generation processing unit generates the left-eye image and the right-eye image by executing the 2D-3D conversion processing in which a parallax is set in accordance with a subject distance by applying the depth map received from the outside.

7. The image processing apparatus according to claim 1, wherein in a case where the control signal indicates a vertically-captured image obtained by image-capturing process with the twin-lens camera held vertically, the image processing apparatus outputs, to the image-capturing apparatus, a control signal for receiving any one of the left-eye image and the right-eye image, or a control signal for capturing any one of the left-eye image and the right-eye image.

8. The image processing apparatus according to claim 1, wherein the image processing apparatus has a depth map generation processing unit for generating a depth map based on the input image, and
the image-capturing angle determination unit executes analysis processing of the depth map, and determines an angle of a camera during image-capturing of the input image on the basis of an analysis result, and outputs a control signal according to a determination result.

9. An image processing method executed by an image processing apparatus,
the image processing method comprising:
image input processing for receiving, as input images, a left-eye image and a right-eye image which are captured from different view point;
image-capturing angle determination processing for outputting a control signal according to an angle of a camera during image-capturing of the input images; and
processing for selectively executing any one of image output processing including processing for, in a case where the control signal indicates a horizontally-captured image obtained by image-capturing process with a twin-lens camera held horizontally, outputting the left-eye image and the right-eye image which are the input images, and processing for, in a case where the control signal indicates a vertically-captured image obtained by image-capturing process with the twin-lens camera held vertically, inputting any one of the left-eye image and the right-eye image into a stereo image generation processing unit, and outputting a left-eye image and a right-eye image, which are generated by causing the stereo image generation processing unit to execute 2D-3D conversion processing for generating the left-eye image and the right-eye image for 3D image display through image conversion processing based on a single 2D image.

10. A program executing image processing on an image processing apparatus,
the program causes the image processing apparatus to execute:
image input processing for receiving, as input images, a left-eye image and a right-eye image which are captured from different view point;
image-capturing angle determination processing for outputting a control signal according to an angle of a camera during image-capturing of the input images; and
processing for selectively executing any one of image output processing including processing for, in a case where the control signal indicates a horizontally-captured image obtained by image-capturing process with a twin-lens camera held horizontally, outputting the left-eye image and the right-eye image which are the input images, and processing for, in a case where the control signal indicates a vertically-captured image obtained by image-capturing process with the twin-lens camera held vertically, inputting any one of the left-eye image and the right-eye image into a stereo image generation processing unit, and outputting a left-eye image and a right-eye image, which are generated by causing the stereo image generation processing unit to execute 2D-3D conversion processing for generating the left-eye image and the right-eye image for 3D image display through image conversion processing based on a single 2D image.
